(19) Europäisches Patentamt European Patent Office Office européen des brevets

(11) **EP 1 634 859 B1**

(12) **EUROPEAN PATENT SPECIFICATION**

(45) Date of publication and mention of the grant of the patent:
**19.06.2013 Bulletin 2013/25**

(51) Int Cl.:
*C04B 35/565* (2006.01)    *C04B 35/63* (2006.01)
*C04B 35/64* (2006.01)    *C04B 38/00* (2006.01)

(21) Application number: **04722013.2**

(22) Date of filing: **19.03.2004**

(86) International application number:
**PCT/JP2004/003738**

(87) International publication number:
**WO 2004/083148 (30.09.2004 Gazette 2004/40)**

(54) **POROUS MATERIAL AND METHOD FOR PREPARATION THEREOF, AND HONEYCOMB STRUCTURE**

PORÖSES MATERIAL UND HERSTELLUNGSVERFAHREN DAFÜR UND WABENSTRUKTUR

MATIERE POREUSE ET PROCEDE DE PREPARATION DE CELLE-CI, ET STRUCTURE EN NID D'ABEILLES

(84) Designated Contracting States:
**DE FR PL**

(30) Priority: **20.03.2003 JP 2003078412**

(43) Date of publication of application:
**15.03.2006 Bulletin 2006/11**

(73) Proprietor: **NGK Insulators, Ltd.
Nagoya-city, Aichi 467-8530 (JP)**

(72) Inventors:
• **KAWASAKI, Shinji
c/o NGK Insulators, LTD.
Nagoya-shi, Aichi; 4678530 (JP)**
• **INOUE, Katsuhiro
c/o NGK Insulators, LTD.
Nagoya-shi, Aichi 4678530 (JP)**
• **MORIMOTO, Kenji
c/o NGK Insulators, LTD.
Nagoya-shi, Aichi 4678530 (JP)**
• **KIKUCHI, Yoshio
c/o NGK Insulators, LTD.
Nagoya-shi, Aichi 4678530 (JP)**

(74) Representative: **Paget, Hugh Charles Edward
Mewburn Ellis LLP
33 Gutter Lane
London
EC2V 8AS (GB)**

(56) References cited:
JP-A- 4 065 360    JP-A- 4 094 736
JP-A- 4 094 736    JP-A- 4 132 662
JP-A- 6 144 930    JP-A- 8 502 714
JP-A- 2001 097 777    JP-A- 2002 274 947

• THUMMLER ET AL: "Engineering ceramics" JOURNAL OF THE EUROPEAN CERAMIC SOCIETY, ELSEVIER SCIENCE PUBLISHERS, BARKING, ESSEX, GB, vol. 6, no. 3, 1 January 1990 (1990-01-01), pages 139-151, XP022829532 ISSN: 0955-2219 [retrieved on 1990-01-01]

## Description

Technical Field

The present invention relates to a porous material, a method for production thereof, and a honeycomb structure. More particularly, the present invention relates to a porous material superior in heat resistance and fluid permeability, a method for production thereof, and a honeycomb structure formed by using the porous material.

Background Art

Honeycomb structures are in use, for example, in filters for capture of fine particles present in exhaust gas, particularly in diesel exhaust gas [hereinafter, the filter for capture of fine particles present in diesel exhaust gas is referred to as "DPF" (diesel particulate filter)], as well as in catalyst carriers used in internal combustion engine, boiler, chemical reactor, fuel cell reformer, etc. As a filter for capture of fine particles, used in a high-temperature, corrosive gas atmosphere, such as DPF, there is used suitably a porous honeycomb structure made of a ceramic. As a material for such a honeycomb structure used in a high-temperature, corrosive gas atmosphere, there is used suitably a silicon-silicon carbide porous material superior in heat resistance and chemical stability, wherein silicon carbide is bonded via silicon used as a binder, because, with such a porous material, it is easy to control the porosity, pore diameter, etc. of the resulting honeycomb structure. Meanwhile, silicon nitride is a preferred material from the standpoint of thermal shock resistance because it has high-temperature resistance and low thermal expansion coefficient. Hence, there was proposed a heat-resistance improved honeycomb structure by using a silicon-nitride-silicon carbide porous material wherein silicon carbide is bonded via silicon nitride (instead of silicon) used as a binder (see, for example, JP-A-H04-94736). In the conventional method, however, there was a problem in that silicon nitride whiskers are formed in the pores of porous material, reducing the gas permeability of porous material.

Disclosure of the Invention

The present invention has been made in view of the above problem and provides a porous material superior in heat resistance and gas permeability, a method for production thereof, and a honeycomb structure.

According to the present invention, there is provided
a porous material wherein silicon carbide particles as an aggregate are bonded with one another via silicon nitride as a binder in such a state that pores are present between the silicon carbide particles, wherein
no columnar silicon nitride (silicon nitride whisker) is formed on the surface of the silicon nitride within each pore, or even when columnar silicon nitride is inevitably formed there, the number of the columnar silicon nitride having a thickness of more than 2 $\mu$m and an aspect ratio of less than 10 is greater than that of the columnar silicon nitride having a thickness of 2 $\mu$m or less or an aspect ratio of 10 or more.

The pores have a specific surface area of 1 $m^2/g$ or less. Preferably the porous material has an open porosity of 40 to 75%. Preferably the pores have an average pore diameter of 5 to 50 $\mu$m. The porous material preferably has a heat resistance temperature of 1,200°C or more. The porous material preferably has a gas permeability coefficient of 1 $\mu m^2$ or more. The invention also provides a method for producing a porous material of the invention wherein the method comprises the steps of:

> mixing at least silicon, silicon carbide and optionally a pore former;
> firing the resulting mixture at 1,400 to 1,500°C in an inert gas atmosphere or reduced-pressure atmosphere where the oxygen partial pressure is 10 Pa or less to prepare a silicon-silicon carbide porous material; and
> nitriding and firing the silicon-silicon carbide porous material at 1,200 to 1,800°C in a nitrogen atmosphere.

Preferably, after preparing the silicon-silicon carbide porous material, the atmosphere used therein is changed to a nitrogen atmosphere without lowering the temperature to room temperature and keeping the temperature at 1,200°C or more, and the nitriding and firing of the silicon-silicon carbide porous material at 1,200 to 1,800°C in the nitrogen atmosphere is conducted.

Alternatively, in the method, it is preferred that, after preparing the silicon-silicon carbide porous material, the nitriding and firing of the silicon-silicon carbide porous material at 1,200 to 1,800°C is conducted in a nitrogen atmosphere containing 0.1% by volume or more of hydrogen.

In another preferred embodiment of the method, after the preparation of the silicon-silicon carbide porous material, the atmosphere is changed to a nitrogen atmosphere containing 0.1% by volume or more of hydrogen (a hydrogen-containing nitrogen atmosphere) without lowering the temperature to room temperature and keeping the temperature at 1,200°C or more, and the nitriding and firing of the silicon-silicon carbide porous material at 1,200 to 1,800°C in the hydrogen-containing nitrogen atmosphere is conducted. In another aspect, the invention provides a honeycomb structure constituted by a porous material of the invention.

Brief Description of the Drawing

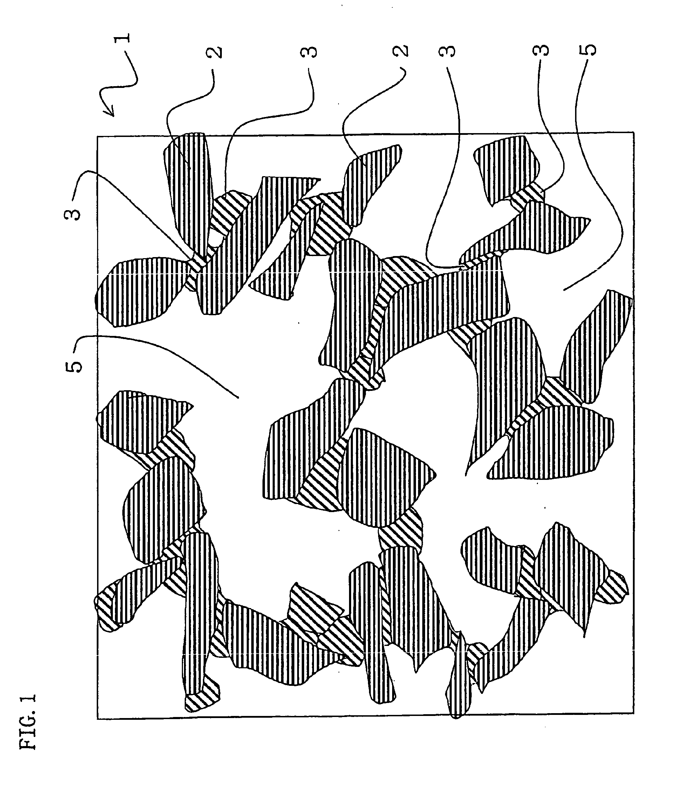

Fig. 1 is a partly enlarged sectional view showing an embodiment of the porous material of the present invention.

Best Mode for Carrying Out the Invention

As shown in Fig. 1, in the porous material 1 of the present embodiment, silicon carbide (SiC) particles 2 as an aggregate are bonded with one another via silicon nitride ($Si_3N_4$) 3 as a binder in such a state that pores 5 are present between the silicon carbide particles 2. As shown in Fig. 1, it is particularly preferred that there is present, on the surface of the silicon nitride 3 within each pore 5, no columnar silicon nitride (hereinafter, this may be referred to as silicon nitride whisker) having a thickness of smaller than 2 $\mu$m and an aspect ratio of larger than 10. Thus, no silicon nitride whisker is present in each pore 5 and, even when silicon nitride whiskers are inevitably present there, the number of the columnar silicon nitride having a thickness of more than 2 $\mu$m and an aspect ratio of less than 10 is greater than that of the columnar silicon nitride having a thickness of 2 $\mu$m or less or an aspect ratio of 10 or more; therefore, it does not happen that part of the pores are blocked by silicon nitride whiskers, and the porous material of the present embodiment is superior in gas permeability. That is, in the porous material of the present embodiment, it can be said that substantially no silicon nitride whisker is present, from the standpoint of gas permeability. This feature appears strikingly when there is present no columnar silicon nitride. Further, in the porous material 1, silicon carbide particles 2 as an aggregate are bonded with one another via silicon nitride 3 as a binder; therefore, the porous material 1 is superior in heat resistance.

The thickness of the columnar silicon nitride refers to a width of columnar silicon nitride in a direction perpendicular to the longitudinal direction of columnar silicon nitride, in a SEM photograph of a fracture surface or a surface of a porous material at a magnification of 5,000 times. In determination of this thickness, the thickness is measured at four points of equal intervals in longitudinal, and the average of the measurements is taken as the thickness of one columnar silicon nitride. The aspect ratio of the columnar silicon nitride is a value obtained by dividing the length of columnar silicon nitride in its length direction, in a SEM photograph of a fracture surface or a surface of porous material at a magnification of 5,000 times, by the thickness of the columnar silicon nitride. The length of the columnar silicon nitride in its longitudinal direction refers to a length of columnar silicon nitride from one end of columnar silicon nitride connecting to the surface of silicon nitride 3 forming pores 5, to the other end of columnar silicon nitride. When the columnar silicon nitride is branched, its length in the longitudinal direction refers to a length of columnar silicon nitride from one end of columnar silicon nitride connecting to the surface of silicon nitride 3 forming pores 5, to each branch end of columnar silicon nitride. The sectional shape of the columnar silicon nitride may be any of circle, oval, oblong shape, polygon (e.g. triangle), modification thereof, and indeterminate shape.

The open porosity of the porous material of the present embodiment is preferably 40 to 75%, more preferably 50 to 75%, particularly preferably 55 to 75%. When the open porosity is less than 40%, the porous material may cause a large pressure loss and may have a low gas permeability coefficient. When the open porosity is more than 75%, the porous material may have a low strength.

The average pore diameter of the porous material of the present embodiment is preferably 5 to 50 $\mu$m, more preferably 10 to 40 $\mu$m, particularly preferably 15 to 30 $\mu$m. When the average pore diameter is less than 5 $\mu$m, the porous material may cause a large pressure loss and may have a low gas permeability coefficient. When the average pore diameter is more than 50 $\mu$m, the porous material may have a low strength.

The gas permeability coefficient of the porous material of the present embodiment is preferably 1 $\mu$m$^2$ or more. When the gas permeability coefficient is less than 1 $\mu$m$^2$, gas permeation is difficult when the porous material is used, for example, as a DPF, and the system may have a high load.

The heat resistance temperature of the porous material of the present embodiment is preferably 1,200°C or higher. When the temperature is lower than 1,200°C, there may arise a problem in heat resistance depending upon the use conditions of the porous material. The heat resistance temperature is the highest temperature at which the porous material shows no change in microstructure and properties, and specifically is the highest temperature at which, when the porous material is subjected to an oxidation treatment for 24 hours in a high oxygen partial pressure (such as in the air), the mass increase of the porous material does no exceed 5% by mass.

In the porous material of the present embodiment, the specific surface area of pores is preferably 1 m$^2$/g or less, more preferably 0.2 to 0.9 m$^2$/g, further preferably 0.3 to 0.9 m$^2$/g, particularly preferably 0.3 to 0.5 m$^2$/g, most preferably 0.3 to 0.4 m$^2$/g. When the specific surface area is larger than 1 m$^2$/g, the pore-inside surface shape becomes more complicated; the gas passages become more curved or enlarged, or have increased narrow portions; and gas permeability may be impaired.

An embodiment of the honeycomb structure of the present invention constituted by the porous material of the present embodiment is a honeycomb structure having a plurality of cells (which become passages of fluid) surrounded and formed by the partition walls made of the porous material of the present embodiment.

Since the partition walls are made of the porous material of the present embodiment, the honeycomb structure of the present embodiment is superior in heat resistance and gas permeability coefficient.

In the honeycomb structure of the present embodiment, there is no particular restriction as to the cell sectional shape, the cell sectional diameter, the cell density, the partition wall thickness, etc.; and they can be determined appropriately depending upon the application of the honeycomb structure.

As shown in Fig. 1, in the porous material 1 of the present embodiment, as in the porous material of the first invention, silicon carbide (SiC) particles 2 as an aggregate are bonded with one another via silicon nitride ($Si_3N_4$) 3 as a binder in such a state that pores 5 are present between the silicon carbide particles 2. In the porous material 1 of the present embodiment, the pores 5 of the porous material 1 have a specific surface area of 1 $m^2/g$ or less. The specific surface area is preferably 0.2 to 0.9 $m^2/g$, more preferably 0.3 to 0.9 $m^2/g$, particularly preferably 0.3 to 0.5 $m^2/g$, most preferably 0.3 to 0.4 $m^2/g$. When the specific surface area is larger than 1 $m^2/g$, the pore-inside surface shape becomes more complicated; the gas passages become more curved or enlarged, or have increased narrow portions; and gas permeability is impaired significantly.

Here, "specific surface area" indicates a surface area per unit mass and is determined, for example, by determining, based on the BET theory, the number (N) of molecules necessary for the mono-molecular layer of the gas physically adsorbed on a sample surface to cover the sample surface, multiplying the molecular number (N) by the molecular sectional area of the adsorbed gas to calculate the surface area of the sample, and dividing the surface area of the sample by the mass of the sample.

In the porous material of the present embodiment, the open porosity, the average pore diameter, the heat resistance temperature and the gas permeability coefficient are preferably the same as in the porous material of the first invention. Thereby can be obtained the same effects as in the porous material of the first invention.

Below is described an embodiment of the method for producing the porous material of the invention.

Silicon, silicon carbide and, as necessary, a pore former are mixed to prepare a raw material for firing. The use amounts of silicon and silicon carbide are preferably 10 to 40% mass and 60 to 90% by mass, respectively, based on the total of the two. The use amount of the pore former is preferably 5 to 40% by mass based on the total of silicon and silicon carbide. It is preferred to add, to the raw material for firing, a compound containing at least one element selected from the group consisting of group 2A, group 3A, group 3B including lanthanoid elements and group 4B. This compound is added preferably in an amount of 0.1 to 10% by mass based on the total of silicon and silicon carbide. In forming the raw material for firing, there may be added as necessary forming aids such as organic binder, surfactant, water and the like.

Silicon is preferably a metallic silicon powder having an average particle diameter of 1 to 20 $\mu$m. Silicon carbide is preferably a silicon carbide powder having an average particle diameter of 10 to 50 $\mu$m.

The element selected from the group consisting of group 2A, group 3A, group 3B including lanthanoid elements and group 4B is added ordinarily in an oxide form. However, it may be added in a form such as carbonate, nitrate, fluoride, nitride, carbide or the like. As specific examples of the oxide, there can be mentioned MgO, CaO, SrO, BaO, $Al_2O_3$, $Y_2O_3$, $CeO_2$, $Sm_2O_3$, $Er_2O_3$, $Yb_2O_3$, $TiO_2$, $ZrO_2$ and $HfO_2$. There may also be used their carbonates, nitrates, fluorides, nitrides and carbides.

As the pore former, there can be used organic substances such as starch, cellulose, foamed resin and the like.

Next, the raw material for firing obtained (this may be a formed material obtained by kneading the raw material for firing to prepare clay for forming, and forming the clay into an intended shape by extrusion or the like) is fired in an inert gas or reduced pressure atmosphere wherein the oxygen partial pressure is 10 Pa or less, to prepare a silicon-silicon carbide porous material. Here, the silicon-silicon carbide porous material is a porous material wherein silicon carbide particles as an aggregate are bonded with one another via silicon as a binder in such a state that pores are present between the silicon carbide particles. The temperature of the firing is preferably 1,400 to 1,500°C. As the inert gas, argon is preferred.

After the preparation of the silicon-silicon carbide porous material, the atmosphere used therein is changed to a nitrogen atmosphere or to a nitrogen atmosphere containing 0.1% by volume or more of hydrogen (a hydrogen-containing atmosphere) without lowering the temperature used in the above firing, of 1,400 to 1,500°C to room temperature and keeping the temperature at 1,200°C or more, and firing and nitriding are conducted at 1,200 to 1,800°C, whereby a silicon nitride-silicon carbide porous material (which is a porous material of the present embodiment) can be obtained. Here, the content of hydrogen in the hydrogen-containing nitrogen atmosphere is 0.1% by volume or more of the total atmosphere, preferably 1 to 30% by volume, more preferably 4 to 10% by volume. In the nitriding reaction, the silicon in the silicon-silicon carbide porous material is nitrided. By thus conducting, after firing of the silicon-silicon carbide porous material, nitriding and firing without lowering the atmospheric temperature to room temperature, the energy required for the nitriding and firing can be made smaller and the firing time can be shortened. As a result, the load to environment and the cost of production can be reduced. Thus, it is preferred not to lower the atmospheric temperature to room temperature after the preparation of silicon-silicon carbide porous material; however, it is possible to once lower the atmospheric temperature to room temperature and then increase the temperature to conduct nitriding and firing.

In conducting the above nitriding, columnar silicon nitride may be formed. The mechanism of formation of the columnar silicon nitride is considered to be such that the oxide present on the surface of metallic silicon vaporizes as a SiO gas and reacts with nitrogen gas, and the reaction product deposits as columnar silicon nitride.

Here, the silicon nitride-silicon carbide porous material is a porous material wherein silicon carbide particles as an aggregate are bonded with one another via silicon nitride as a binder in such a state that pores are present between the silicon carbide particles.

As described above, nitriding and firing are conducted at 1,200 to 1,800°C and, therefore, the once-formed columnar silicon nitride melts and grows again as a large crystal. As a result, the columnar silicon nitride decreases or disappears in the porous material obtained; and no columnar silicon nitride (silicon nitride whisker) having a thickness of less than 2 $\mu$m and an aspect ratio of larger than 10 is present on the surface of the silicon nitride within each pore, or, even when silicon nitride whiskers are inevitably present there, the number of the columnar silicon nitride having a thickness of more than 2 $\mu$m and an aspect ratio of less than 10 is greater than that of the columnar silicon nitride having a thickness of 2 $\mu$m or less or an aspect ratio of 10 or more. In this connection, the specific surface area of pores can be made 1 m$^2$/g or less. When the firing is conducted at a temperature higher than 1,800°C in a nitrogen atmosphere (nitrogen: 100% by volume) at normal pressure (atmospheric pressure), silicon nitride begins to decompose; therefore, firing under applied pressure is necessary to prevent such decomposition. Hence, firing at a temperature higher than 1,800°C incurs a problem of higher facility cost. When the firing is conducted at a temperature lower than 1,200°C, formation of silicon nitride is insufficient and silicon remains in a large amount. Also, part of the porous material may not be covered with silicon nitride and silicon may be exposed. As a result, the porous material formed is low in heat resistance.

The compound containing at least one element selected from the group consisting of group 2A, group 3A, group 3B including lanthanoid elements and group 4B, which is added to the raw material for firing, exhibits a function as an aid capable of forming a liquid phase at high temperatures. Therefore, when the compound as the aid is added to the raw material for firing and there are conducted nitriding of silicon and firing at 1,200 to 1,800°C, the columnar silicon nitride formed by silicon nitriding is heat-treated together with the compound as the aid at high temperatures of 1,200 to 1,800°C; as a result, the cylindrical particles of silicon nitride (Si$_3$N$_4$) dissolves in the compound (aid) which has become a liquid phase owing to high temperatures, the columnar silicon nitride disappears, and there takes place deposition of large cylindrical particles. In this way, there can be obtained a porous material of the present embodiment which is a silicon nitride-silicon carbide porous material containing silicon nitride constituted mainly by $\beta$-Si$_3$N$_4$ large cylindrical particles.

When the addition amount of the compound as the aid exceeds 10% by mass based on the total of silicon and silicon carbide, the porous material obtained may be poor in high-temperature properties, for example, heat resistance. Depending upon the kind of the aid used, the porous material obtained may be high in thermal expansion coefficient. When the addition amount of the compound as an aid is less than 0.1% by mass, the function of the aid may not be exhibited sufficiently.

Meanwhile, when nitriding is conducted in a nitrogen atmosphere containing at least 0.1% by volume of hydrogen at 1,200 to 1,800°C, a porous material of the present embodiment (which is a silicon nitride-silicon carbide porous material) can be obtained without conducting firing at high temperatures of 1,200 to 1,800°C in order to dissolve columnar silicon nitride. With a high nitriding temperature, the energy required for temperature elevation is large, the load to environment is large, and the cost of preparation is high; therefore, the high nitriding temperature is not preferred. When nitriding is conducted in a hydrogen-containing nitrogen atmosphere, the same intended porous material can be obtained even at 1,500°C or below.

When, as described above, change of atmosphere is made to a nitrogen atmosphere or a nitrogen atmosphere containing at least 0.1% by volume of hydrogen, keeping the temperature at 1,200°C or more without lowering the temperature used in firing, of 1,400 to 1,500°C to room temperature and in this state, nitriding and firing are conducted at 1,200 to 1,800°C, the temperature at which the change of atmosphere is made, is preferred to be not lower than the above-mentioned firing temperature of 1,400 to 1,500°C. Thereby, there can be obtained a porous material wherein there is present, on the surface of the silicon nitride within each pore, no columnar silicon nitride (silicon nitride whisker) having a thickness of less than 2 $\mu$m and an aspect ratio of more than 10, or, even when silicon nitride whiskers are inevitably present there, the number of the columnar silicon nitride having a thickness of more than 2 $\mu$m and an aspect ratio of less than 10 is greater than that of the columnar silicon nitride having a thickness of 2 $\mu$m or less or an aspect ratio of 10 or more.

When the silicon of the silicon-silicon carbide porous material is nitrided, it is preferred that the nitriding ratio of silicon (which is a value indicating the proportion of metallic silicon converted into silicon nitride and can be calculated from an X-ray diffraction intensity ratio of metallic silicon and silicon nitride) is 90% or more. When the nitriding ratio of silicon is less than 90%, the resulting porous material is high in thermal expansion coefficient, and, if metallic silicon remains in a large amount, there may be deterioration in high-temperature properties such as heat resistance and high-temperature strength.

Further, since the silicon in silicon-silicon carbide porous material is nitrided, the silicon can be converted into silicon nitride in a state that silicon carbide is bonded via silicon, and a high strength can be retained.

The raw materials for firing are mixed, kneaded and formed into an intended shape by extrusion or the like to prepare a formed material; in this case, the formed material is allowed to have a honeycomb structure; and the formed material of honeycomb structure is fired, nitrided, and fired at high temperatures; thereby can be obtained a honeycomb structure of the present invention.

(Examples)

The present invention is described more specifically below by way of Examples. However, the present invention is in no way restricted to these Examples.

(Example 1)

To 100% by mass of the total of 80% by mass of silicon carbide (SiC) having an average particle diameter of 47 $\mu$m and 20% by mass of a metallic silicon (Si) powder having an average particle diameter of 5 $\mu$m were added, as superaddition, 1% by mass of strontium carbonate which was a compound as the aid (hereinafter, this compound may be referred to as "aid"), 10% by mass of starch as a pore former, 8% by mass of methyl cellulose as a binder, 1% by mass of a surfactant and 19% by mass of water. They were mixed to prepare a raw material before firing. The raw material was kneaded by a kneader and subjected to extrusion, to prepare a formed material of honeycomb structure. The formed material of honeycomb structure was held in the air at 500°C to remove the binder. Then, the resulting material was fired (before-nitriding firing of formed material) at 1.3 Pa in an argon atmosphere at 1,450°C for 2 hours, to obtain a silicon-silicon carbide porous material of honeycomb structure. After the preparation of the silicon-silicon carbide porous material, the system temperature was lowered to room temperature and, at the room temperature, the atmosphere was changed to a nitrogen atmosphere. The room temperature was increased to 1,450°C and the above-obtained silicon-silicon carbide porous material of honeycomb structure was maintained at normal pressure (atmospheric pressure) in a nitrogen atmosphere at 1,450°C for 4 hours to give rise to nitriding, after which the resulting material was maintained at 1,750°C for 4 hours (during-nitriding firing) to obtain a sintered material (a honeycomb ceramic structure). The conditions used for preparation of this material are shown in Table 1. In Table 1, in the lateral column of "before-nitriding firing and during-nitriding firing", "separate firings" indicate that, after preparation of silicon-silicon carbide porous material by firing, the temperature used is decreased to room temperature and then nitriding and firing are conducted (firing is conducted two times), and "same firing" indicates that, after preparation of silicon-silicon carbide porous material by firing, nitriding and firing are conducted without temperature decrease (two firings are conducted continuously). Also in Table 1, "temperature of atmosphere change" indicates a temperature at which, in nitriding of silicon-silicon carbide porous material prepared, the atmosphere used in preparation of the material is changed to a nitrogen atmosphere. Test pieces of 4 mm x 3 mm x 40 mm, 10 mm (diameter) x 3 mm, etc. were cut out from the sintered material and measured for the following evaluation items. The results of measurements are shown in Table 3.

(Evaluation items)

Open porosity

Measured by an in-water weight method.

Average pore diameter

Measured using a mercury porosimeter.

Four-point bending strength

Measured using a cut-out test piece of 4 mm x 3 mm x 40 mm, according to JIS R 1601.

Comparison of "thickness" and "aspect ratio" of columnar silicon nitride (condition 1)

"Thickness" and "aspect ratio" of columnar silicon nitride were measured as described below, and there was made a comparison between "the number of columnar silicon nitride having a thickness of more than 2 $\mu$m and an

aspect ratio of less than 10 (this number is arbitrarily expressed as A)" and the number of columnar silicon nitride having a thickness of 2 $\mu$m or less and an aspect ratio of 10 or more (this number is arbitrarily expressed as B)". A case when A was larger than B, was evaluated as "suitable"; and a case when A was smaller than B, was evaluated as "unsuitable".

Thickness of columnar silicon nitride (columnar thickness)

In a SEM photograph (a magnification of 5,000 times) of a fracture surface or a surface of porous material, there was measured a width of columnar silicon nitride in a direction perpendicular to its longitudinal direction. This length was measured at four points in longitudinal direction at equal intervals, and an average thereof was taken as thickness of one columnar silicon nitride.

Aspect ratio of columnar silicon nitride (aspect ratio)

In a SEM photograph (a magnification of 5,000 times) of the fracture surface or the surface of porous material, there were measured a longitudinal direction length of columnar silicon nitride and its thickness; and the length was divided by the thickness. The value obtained was taken as aspect ratio.

Specific surface area

Measured by a gas adsorption method using a volumetric method.

Mass change after treatment in the air at 1,200°C for 24 hours (1,200°C x 24 hr treatment)

A porous material was maintained in the air at 1,200°C for 24 hours and the mass change thereof was measured. This mass change is a value obtaining by subtracting the mass of the porous material after the above treatment of maintaining it at 1,200°C for 24 hours, from the mass of the porous material before the treatment, diving the resulting difference by the mass before the treatment, and multiplying the resulting quotient by 100.

Heat resistance temperature

The highest temperature at which mass change after a treatment in the air for 24 hours does not exceed 5%.

Gas permeability coefficient

Determined based on the following measurement and calculation according to the Darcy's law, in consideration of gas compressibility. From a honeycomb ceramic structure was cut out a part of the partition wall. The cut-out part was processed into a plate having no surface unevenness to use it as a sample. This sample was sandwiched at the two flat surface portions (two sides) by two cylindrical tubes so that the two tubes faced each other at the open ends and there occurred no gas leakage. In this case, the two cylindrical tubes were allowed to face each other at their open ends via the sample and the central axes of the two cylindrical tubes coincided with each other. Then, the air was fed into one of the cylindrical tubes to allow the air to pass through the cylindrical tubes, with the flow amount of the air being controlled. In this case, the pressures at the upstream side and downstream side of the sample were measured and the gas permeability coefficient of the sample was determined using the following expression (1). Incidentally, in the following expression (1); K is a gas permeability coefficient ($\mu$m$^2$); Q is an amount (m$^3$/s) of gas which passed, measured at the sample downstream side; T is a sample thickness (m); $\mu$ is a static viscosity coefficient (Pa·s) of gas which passed; D is a diameter (m) of sample at the portion which gas passed; P1 is a gas pressure (Pa) at upstream side; and P2 is a gas pressure (Pa) at downstream side.

$$K = [8 \cdot \mu \cdot T \cdot Q \cdot P2] \div [\pi \cdot D^2 \cdot (P1^2 - P2^2)] \times 10^{12} \qquad (1)$$

(Example 2)

After "obtaining a silicon-silicon carbide porous material of honeycomb structure" in Example 1, no temperature decrease was made and the temperature of atmosphere was maintained at 1,400°C and, in this state, the atmosphere was changed to a nitrogen atmosphere. Then, the system was maintained at normal pressure (atmospheric pressure) in a nitrogen atmosphere at 1,450°C for 4 hours to conduct a nitriding treatment. Thereafter, the system was maintained at 1,750°C for 4 hours (during-nitriding firing) to obtain a sintered material (a honeycomb ceramic structure). The preparation conditions are shown in Table 1. Other conditions were the same as in Example 1. In the same manner as in Example 1, test pieces were cut out from the sintered material obtained and measured for the above-mentioned evaluation items. The results of measurements are shown in Table 3.

(Example 3)

A sintered material was prepared (the preparation conditions are shown in Table 1), in the same manner as in Example 1 except that no pore former was added (in Example 1, starch was added as a pore former). Test pieces were cut out from the sintered material obtained and measured for the above-mentioned evaluation items in the same manner as in Example 1. The results of measurements are shown in Table 3.

(Example 4)

A sintered material was prepared (the preparation conditions are shown in Table 1), in the same manner as in Example 1 except that no aid was added (in Example 1, strontium carbonate was added as the aid). Test pieces were cut out from the sintered material obtained and measured for the above-mentioned evaluation items in the same manner as in Example 1. The results of measurements are shown in Table 3.

(Example 5)

"The resulting material was fired at 1.3 Pa in an argon atmosphere at 1,450°C for 2 hours, to obtain a silicon-silicon carbide porous material of honeycomb structure" in Example 1 was changed to "the resulting material was fired at normal pressure (atmospheric pressure) in an argon atmosphere (oxygen partial pressure: 10 Pa) at 1,450°C for 2 hours to obtain a silicon-silicon carbide porous material of honeycomb structure". Other conditions were the same as in Example 1, to prepare a sintered material (the preparation conditions are shown in Table 1). Test pieces were cut out from the sintered material obtained and measured for the above-mentioned evaluation items in the same manner as in Example 1. The results of measurements are shown in Table 3.

(Example 6)

A sintered material was prepared (the preparation conditions are shown in Table 1), in the same manner as in Example 1 except that the average particle diameter of silicon carbide (SiC) was changed to 24 $\mu$m. Test pieces were cut out from the sintered material obtained and measured for the above-mentioned evaluation items in the same manner as in Example 1. The results of measurements are shown in Table 3.

(Example 7)

A sintered material was prepared (the preparation conditions are shown in Table 1), in the same manner as in Example 1 except that the addition amount of starch (pore former) was changed to 30% by mass. Test pieces were cut out from the sintered material obtained and measured for the above-mentioned evaluation items in the same manner as in Example 1. The results of measurements are shown in Table 3.

(Example 8)

A sintered material was prepared (the preparation conditions are shown in Table 1), in the same manner as in Example 1 except that the addition amount of pore former was changed to 40% by mass. Test pieces were cut out from the sintered material obtained and measured for the above-mentioned evaluation items in the same manner as in Example 1. The results of measurements are shown in Table 3.

(Example 9)

A sintered material was prepared (the preparation conditions are shown in Table 1), in the same manner as in Example 1 except that the mass ratio of silicon carbide and silicon was changed to 70:30, the ratio of the mass total of silicon carbide and silicon to the mass of the before-firing raw material total was made the same as in Example 1, and the aid was added so that the amount ratio of aid and silicon became the same as the amount ratio of aid and silicon in Example 1. Test pieces were cut out from the sintered material obtained and measured for the above-mentioned evaluation items in the same manner as in Example 1. The results of measurements are shown in Table 3.

(Example 10)

A sintered material was prepared (the preparation conditions are shown in Table 1), in the same manner as in Example 1 except that the average particle diameter of silicon carbide (SiC) was changed to 68 μm. Test pieces were cut out from the sintered material obtained and measured for the above-mentioned evaluation items in the same manner as in Example 1. The results of measurements are shown in Table 3.

(Example 11)

A sintered material was prepared (the preparation conditions are shown in Table 1), in the same manner as in Example 1 except that the average particle diameter of silicon carbide (SiC) was changed to 12 μm. Test pieces were cut out from the sintered material obtained and measured for the above-mentioned evaluation items in the same manner as in Example 1. The results of measurements are shown in Table 3.

(Example 12)

A sintered material was prepared (the preparation conditions are shown in Table 1), in the same manner as in Example 1 except that the addition amount of aid (strontium carbonate) was changed to 3% by mass and that "the silicon-silicon carbide porous material of honeycomb structure was maintained at normal pressure (atmospheric pressure) in a nitrogen atmosphere at 1,450°C for 4 hours and further maintained at 1,750°C for 4 hours (during-nitriding firing)" was changed to "the silicon-silicon carbide porous material of honeycomb structure was maintained at normal pressure (atmospheric pressure) in a nitrogen atmosphere at 1,200°C for 12 hours". In the same manner as in Example 1, test pieces were cut out from the sintered material obtained and measured for the above-mentioned evaluation items. The results of measurements are shown in Table 3.

(Example 13)

A sintered material was prepared (the preparation conditions are shown in Table 1), in the same manner as in Example 1 except that "at 1.3 Pa in an argon atmosphere" was changed to "at normal pressure (atmospheric pressure) in an argon atmosphere (oxygen partial pressure: 10 Pa)" and that "the silicon-silicon carbide porous material of honeycomb structure was maintained at normal pressure (atmospheric pressure) in a nitrogen atmosphere at 1,450°C for 4 hours to give rise to nitriding, after which the resulting material was maintained at 1,750°C for 4 hours (during-nitriding firing) to obtain a sintered material (a honeycomb ceramic structure)" was changed to "the silicon-silicon carbide porous material of honeycomb structure was maintained at normal pressure (atmospheric pressure) in a nitrogen atmosphere containing 5% by volume of hydrogen at 1,450°C for 4 hours to obtain a sintered material (a honeycomb ceramic structure)". In the same manner as in Example 1, test pieces were cut out from the sintered material obtained and measured for the above-mentioned evaluation items. The results of measurements are shown in Table 3.

(Example 14)

A sintered material was prepared (the preparation conditions are shown in Table 1), in the same manner as in Example 1 except that "at 1.3 Pa in an argon atmosphere" was changed to "at normal pressure (atmospheric pressure) in an argon atmosphere (oxygen partial pressure: 10 Pa)" and that "After the preparation of the silicon-silicon carbide porous material, the temperature was lowered to room temperature and, at this temperature, the atmosphere was changed to a nitrogen atmosphere. The room temperature was increased to 1,450°C and the above-obtained silicon-silicon carbide porous material of honeycomb structure was held at normal pressure (atmospheric pressure) in a nitrogen atmosphere at 1,450°C for 4 hours to give rise to nitriding, after which the resulting material was held at 1,750°C for 4 hours (during-nitriding firing) to obtain a sintered material (a honeycomb ceramic structure)" was changed to "After the preparation of the silicon-silicon carbide porous material, the system atmosphere was changed to a nitrogen atmosphere containing 5% by volume of hydrogen, in a state that the system temperature was maintained at 1,450°C without lowering it to room temperature, and the silicon-silicon carbide porous material was maintained at 1,450°C for 4 hours to obtain a sintered material (a honeycomb ceramic structure)". In the same manner as in Example 1, test pieces were cut out from the sintered material obtained and measured for the above-mentioned evaluation items. The results of measurements are shown in Table 3.

(Comparative Example 1)

A formed material of honeycomb structure was prepared by extrusion, in the same manner as in Example 1.

The formed material was maintained in the air at 500°C to remove the binder contained therein and then maintained at normal pressure (atmospheric pressure) in a nitrogen atmosphere at 1,450°C for 4 hours to conduct nitriding. Thereafter, the nitrided material was maintained at 1,750°C for 4 hours to obtain a nitrided formed material of honeycomb structure. This material was not sintered and, when touched, collapsed. Therefore, cutting out of test pieces therefrom was impossible (the preparation conditions are shown in Table 2), and measurements for the above-mentioned evaluation items were impossible.

(Comparative Example 2)

A silicon-silicon carbide porous material of honeycomb structure was obtained in the same manner as in Example 1 except that, in the before-nitriding firing of formed material, the formed material was fired at normal pressure (atmospheric pressure) in an argon atmosphere (oxygen partial pressure: 100 Pa) at 1,450°C for 2 hours. A sintered material was prepared from the silicon-silicon carbide porous material in the same manner as in Example 1 (the preparation conditions are shown in Table 2). Test pieces were cut out from the sintered material and measured for the above-mentioned evaluation items in the same manner as in Example 1. The results of measurements are shown in Table 4.

(Comparative Example 3)

A sintered material was prepared in the same manner as in Example 1 (the preparation conditions are shown in Table 2) in the same manner as in Example 1 except that the average particle diameter of silicon carbide (SiC) was changed to 24 $\mu$m and that "before-nitriding firing of formed material" was changed to "The formed material was fired at normal pressure (atmospheric pressure) in an argon atmosphere (oxygen partial pressure: 100 Pa) at 1,450°C for 2 hours to obtain a silicon-silicon carbide porous material of honeycomb structure". Test pieces were cut out from the sintered material and measured for the above-mentioned evaluation items in the same manner as in Example 1. The results of measurements are shown in Table 4.

(Comparative Example 4)

A sintered material was prepared in the same manner as in Example 1 in the same manner as in Example 1 except that the addition amount of aid (strontium carbonate) was changed to 3% by mass and that "The silicon-silicon carbide porous material of honeycomb structure was maintained at normal pressure (atmospheric pressure) in a nitrogen atmosphere at 1,450°C for 4 hours and further at 1,750°C for 4 hours (during-nitriding firing)." was changed to "The silicon-silicon carbide porous material of honeycomb structure was maintained at normal pressure (atmospheric pressure) in a nitrogen atmosphere at 1,100°C for 12 hours." In the same manner as in Example 1, test pieces were cut out from the sintered material and measured for the above-mentioned evaluation items. The results of measurements are shown in Table 4.

Table 1-1

| | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| Aid ($SrCO_3$) (mass %) | | 1 | 1 | 1 | 0 | 1 | 1 | 1 | 1 | 1 | 1 |
| Pore former (starch) (mass %) | | 10 | 10 | 0 | 10 | 10 | 10 | 30 | 40 | 0 | 10 |
| Before-nitriding firing of formed body | | Yes | Yes | Yes | Yes | Yes | Yes | Yes | Yes | Yes | Yes |
| Firing conditions of formed body | Pressure | 1.3 Pa | 1.3 Pa | 1.3 Pa | 1.3 Pa | Normal | 1.3 Pa | 1.3 Pa | 1.3 Pa | 1.3 Pa | 1.3 Pa |
| | Atmosphere | Ar | Ar | Ar | Ar | Ar(oxygen partial pressure: 10 Pa) | Ar | Ar | Ar | Ar | Ar |
| | Temp. | 1450°C | 1450°C | 1450°C | 1450°C | 1450°C | 1450°C | 1450°C | 1450°C | 1450°C | 1450°C |
| | Time | 2 hr | 2 hr | 2 hr | 2 hr | 2 hr | 2 hr | 2 hr | 2 hr | 2 hr | 2 hr |
| During-nitriding firing conditions | Pressure | Normal | Normal | Normal | Normal | Normal | Normal | Normal | Normal | Normal | Normal |
| | Atmosphere | $N_2$ | $N_2$ | $N_2$ | $N_2$ | $N_2$ | $N_2$ | $N_2$ | $N_2$ | $N_2$ | $N_2$ |
| | Temp. and time | 1950°C & 4 hr then 1750°C & 4 hr | 1450°C & 4 hr then 1750°C & 4 hr | 1450°C & 4 hr then 1750°C & 4 hr | 1450°C & 4 hr then 1750°C & 4 hr | 1450°C & 4 hr then 1750°C & 4 hr | 1450°C & 4 hr then 1750°C & 4 hr | 1450°C & 4 hr then 1750°C & 4 hr | 1450°C & 4 hr then 1750°C & 4 hr | 1450°C & 4 hr then 1750°C & 4 hr | 1450°C & 4 hr then 1750°C & 4 hr |
| Before-nitriding firing and during-nitriding firing (temp. of atmosphere change) | | Separate firings (room temp.) | Same firing (1400°C) | Separate firings (room temp.) | Separate firings (room temp.) | Separate firings (room temp.) | Separate firings (room temp.) | Separate firings (room temp.) | Separate firings (room temp.) | Separate firings (room temp.) | Separate firings (room temp.) |

Table 1-2

| | | Ex. 11 | Ex. 12 | Ex. 13 | Ex. 14 |
|---|---|---|---|---|---|
| Aid ($SrCO_3$) (mass %) | | 1 | 3 | 1 | 1 |
| Pore former (starch) (mass %) | | 30 | 10 | 10 | 10 |
| Before-nitriding firing of formed body | | Yes | Yes | Yes | Yes |
| Firing conditions of formed body | Pressure | 1.3 Pa | 1.3 Pa | Normal | Normal |
| | Atmosphere | Ar | Ar | Ar (oxygen partial pressure: 10 Pa) | Ar (oxygen partial pressure: 10 Pa) |
| | Temp. | 1450°C | 1450°C | 1450°C | 1450°C |
| | Time | 2 hr | 2 hr | 2 hr | 2 hr |
| During-nitriding firing conditions | Pressure | Normal | Normal | Normal | Normal |
| | Atmosphere | $N_2$ | $N_2$ | $N_2$ containing 5 vol. % of hydrogen | $N_2$ containing 5 vol. % of hydrogen |
| | Temp. and time | 1450°C & 4 hr then 1750°C & 4 hr | 1200°C & 12 hr | 1450°C & 4 hr | 1450°C & 4 hr |
| Before-nitriding firing and during-nitriding firing (temp. of atmosphere change) | | Separate firings (room temp.) | Separate firings (room temp.) | Separate firings (room temp.) | Same firing (1450°C) |

Table 2

| | | Comp. Ex. 1 | Comp. Ex. 2 | Comp. Ex. 3 | Comp. Ex. 4 |
|---|---|---|---|---|---|
| Aid ($SrCO_3$) (mass %) | | 1 | 1 | 1 | 3 |
| Pore former (starch) (mass %) | | 10 | 10 | 10 | 10 |
| Before-nitriding firing of formed body | | No | Yes | Yes | Yes |
| Firing conditions of formed body | Pressure | | Normal | Normal | 1.3 Pa |
| | Atmosphere | | Ar (oxygen partial pressure : 100 Pa) | Ar (oxygen partial pressure : 100 Pa) | Ar |
| | Temp. | | 1450°C | 1450°C | 1450°C |
| | Time | | 2 hr | 2 hr | 2 hr |
| During-nitriding firing conditions | Pressure | Normal | Normal | Normal | Normal |
| | Atmosphere | $N_2$ | $N_2$ | $N_2$ | $N_2$ |
| | Temp. and time | 1450°C & 4 hr then 1750°C & 4 hr | 1450°C & 4 hr then 1750°C & 4 hr | 1450°C & 4 hr then 1750°C & 4 hr | 1100°C & 12 hr |
| Before-nitriding firing and during-nitriding firing (temp. of atmosphere change) | | Not sintered and collapsed upon touch. | Separate firings (room temp.) | Separate firings (room temp.) | Separate firings (room temp.) |

Table 3-1

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| Open porosity (%) | 60 | 60 | 47 | 61 | 59 | 60 | 75 | 78 | 34 | 60 |
| Average pore diameter ($\mu$m) | 27 | 26 | 11 | 24 | 26 | 8 | 10 | 32 | 3 | 53 |
| Specific surface area (m$^2$/g) | 0.3 | 0.3 | 0.3 | 0.4 | 0.3 | 0.5 | 0.4 | 0.4 | 0.3 | 0.4 |
| Four-point bending strength (MPa) | 16 | 16 | 27 | 15 | 14 | 8 | 10 | 1 | 53 | 2 |
| Gas permeability coefficient ($\mu$m$^2$) | 2.0 | 1.9 | 1.0 | 2.1 | 1.9 | 1.2 | 1.9 | 18 | 0.1 | 15 |
| Condition 1 | Suitable | Suitable | Suitable | Suitable | Suitable | Suitable | Suitable | Suitable | Suitable | Suitable |
| 1200°C x 24 hr treatment (mass %) | 4.4 | 4.4 | 2.6 | 4.4 | 4.3 | 4.5 | 5.0 | 5.0 | 2.4 | 5.0 |
| Heat resistance temp. (°C) | 1300 | 1300 | 1400 | 1300 | 1300 | 1300 | 1200 | 1100 | 1400 | 1200 |

Table 3-2

|  | Ex. 11 | Ex. 12 | Ex. 13 | Ex. 14 |
|---|---|---|---|---|
| Open porosity (%) | 75 | 60 | 50 | 50 |
| Average pore diameter ($\mu$m) | 3 | 22 | 15 | 19 |
| Specific surface area (m$^2$/g) | 0.9 | 0.4 | 0.5 | 0.3 |
| Four-point bending strength (MPa) | 21 | 18 | 20 | 15 |
| Gas permeability coefficient ($\mu$m$^2$) | 0.2 | 1.5 | 2.2 | 4.1 |
| Condition 1 | Suitable | Suitable | Suitable | Suitable |
| 1200°C x 24 hr treatment (mass %) | 5.5 | 4.5 | 4.4 | 4.3 |
| Heat resistance temp. (°C) | 1150 | 1300 | 1400 | 1400 |

Table 4

|  | Comp. Ex. 1 | Comp. Ex. 2 | Comp. Ex. 3 | Comp. Ex. 4 |
|---|---|---|---|---|
| Open porosity (%) | Not sintered and collapsed upon touch. | 60 | 60 | 60 |
| Average pore diameter ($\mu$m) | - | 8 | 5 | 25 |
| Specific surface area (m$^2$/g) | - | 3.1 | 1.2 | 0.3 |
| Four-point bending strength (MPa) | - | 11 | 21 | 14 |
| Gas permeability coefficient ($\mu$m$^2$) | - | 0.1 | 0.1 | 2.0 |
| Condition 1 | - | Unsuitable | Unsuitable | No silicon nitride formed and unsuitable |
| 1200°C x 24 hr treatment (mass %) | - | 6.2 | 6.1 | 6.5 |
| Heat resistance temp. (°C) | - | 1100 | 1100 | 1100 |

As is clear from Tables 3 and 4, the porous materials of Examples 1 to 14 according to the present invention are low in the generation amount of columnar silicon nitride of given size and have a specific surface area of pores, of 1 m$^2$/g or less; therefore, these porous materials are superior in heat resistance and gas permeability. Having an open porosity of 40 to 75%, they are clearly superior in strength and gas permeability. Further, having an average pore diameter of 5 to 50 $\mu$m, they are greatly superior in strength and gas permeability. The porous material of Comparative Example 4 is large in the amount of mass change in a 1,200°C x 24 hr treatment and inferior in heat resistance. This is because the during-nitriding firing is conducted at a low temperature (1,100°C) and resultantly the formation of silicon nitride is not enough and silicon remains unnitrided in a large mount.

Industrial Applicability

As described above, in the porous material of the present invention, silicon carbide particles as an aggregate are bonded with one another via silicon nitride as a binder; therefore, the present porous material is superior in heat resistance. Further, in the porous material, no columnar silicon nitride (silicon nitride whisker) is present on the surface of the silicon nitride within each pore, or, even when silicon nitride whiskers are inevitably present there, the number of the columnar silicon nitride having a thickness of more than 2 $\mu$m and an aspect ratio of less than 10 is greater than that of the columnar silicon nitride having a thickness of 2 $\mu$m or less or an aspect ratio of 10 or more; therefore, part of the pores is not blocked by the silicon nitride whiskers, making the present porous material superior in gas permeability.

**Claims**

1. A porous material (1) wherein silicon carbide particles (2) as an aggregate are bonded with one another via silicon nitride (3) as a binder in such a state that pores (5) are present between the silicon carbide particles (2), wherein the pores (5) have a specific surface area of 1 m$^2$/g or less, and wherein
no columnar silicon nitride is formed on the surface of the silicon nitride (3) within each pore (5), or
even when columnar silicon nitride is inevitably formed there, the number of the columnar silicon nitride having a thickness of more than 2 $\mu$m and an aspect ratio of less than 10 is greater than that of the columnar silicon nitride having a thickness of 2 $\mu$m or less or an aspect ratio of 10 or more.

2. A porous material (1) according to Claim 1, having an open porosity of 40 to 75%.

3. A porous material (1) according to Claim 1 or 2, wherein the pores (5) have an average pore diameter of 5 to 50 $\mu$m.

4. A porous material (1) according to any of Claims 1 to 3, which has a heat resistance temperature of 1,200°C or more.

5. A porous material (1) according to any of Claims 1 to 4, which has a gas permeability coefficient of 1 $\mu$m$^2$ or more.

6. A method for producing a porous material (1) set forth in any of Claims 1 to 5, wherein the method comprises the steps of:

   mixing at least silicon, silicon carbide and, optionally, a pore former;
   firing the resulting mixture at 1,400 to 1,500°C in an inert gas atmosphere or reduced-pressure atmosphere where the oxygen partial pressure is 10 Pa or less to prepare a silicon-silicon carbide porous material; and
   nitriding and firing the silicon-silicon carbide porous material at 1,200 to 1,800°C in a nitrogen atmosphere.

7. A method for producing a porous material (1) according to Claim 6, wherein, after preparing the silicon-silicon carbide porous material, the atmosphere used therein is changed to a nitrogen atmosphere without lowering the temperature to room temperature and keeping the temperature at 1,200°C or more, and the nitriding and firing of the silicon-silicon carbide porous material at 1,200 to 1,800°C in the nitrogen atmosphere is conducted.

8. A method for producing a porous material (1) according to Claim 6, wherein, after preparing the silicon-silicon carbide porous material, the nitriding and firing of the silicon-silicon carbide porous material at 1,200 to 1,800°C is conducted in a nitrogen atmosphere containing 0.1% by volume or more of hydrogen.

9. A method for producing a porous material (1) according to Claim 6, wherein, after the preparation of the silicon-silicon carbide porous material, the atmosphere is changed to a nitrogen atmosphere containing 0.1% by volume or more of hydrogen without lowering the temperature to room temperature and keeping the temperature at 1,200°C or more, and the nitriding and firing the silicon-silicon carbide porous material at 1,200 to 1,800°C is conducted in said nitrogen atmosphere containing 0.1% by volume or more of hydrogen.

10. A honeycomb structure constituted by a porous material (1) set forth in any of Claims 1 to 5.


**Patentansprüche**

1. Poröses Material (1), in dem Siliciumcarbidteilchen (2) als Aggregat miteinander durch Siliciumnitrid (3) als Bindemittel so verbunden sind, dass Poren (5) zwischen den Siliciumcarbidteilchen (2) vorhanden sind, worin die Poren (5) eine spezifische Oberfläche von 1 m$^2$/g oder weniger aufweisen, und worin
in den Poren (5) kein säulenförmiges Siliciumnitrid auf der Oberfläche des Siliciumnitrids (3) ausgebildet ist oder, wenn die Entstehung von säulenförmigem Siliciumnitrid unvermeidbar ist, die Anzahl der Siliciumnitrid-Säulen mit einer Dicke von mehr als 2 $\mu$m und einem Seitenverhältnis von weniger als 10 höher ist als jene der Siliciumnitrid-Säulen mit einer Dicke von 2 $\mu$m oder weniger oder einem Seitenverhältnis von 10 oder mehr.

2. Poröses Material (1) nach Anspruch 1 mit einer offenen Porosität von 40 bis 75 %.

3. Poröses Material (1) nach Anspruch 1 oder 2, worin die Poren (5) einen mittleren Porendurchmesser von 5 bis 50 $\mu$m aufweisen.

**4.** Poröses Material (1) nach einem der Ansprüche 1 bis 3, das eine Wärmebeständigkeitstemperatur von 1.200 °C oder mehr aufweist.

**5.** Poröses Material (1) nach einem der Ansprüche 1 bis 4, das einen Gasdurchlässigkeitskoeffizienten von 1 $\mu m^2$ oder mehr aufweist.

**6.** Verfahren zur Herstellung eines porösen Materials (1) nach einem der Ansprüche 1 bis 5, worin das Verfahren folgende Schritte umfasst:

das Vermischen zumindest von Silicium, Siliciumcarbid und gegebenenfalls einem Porenbildner;
das Brennen des resultierenden Gemischs bei 1.400 bis 1.500 °C unter einer Inertgasatmosphäre oder reduziertem Druck, wobei der Sauerstoffpartialdruck 10 Pa oder weniger beträgt, um ein poröses Silicium-Siliciumcarbid-Material herzustellen, und
das Nitridieren und Brennen des porösen Silicium-Siliciumcarbid-Materials bei 1.200 bis 1.800 °C unter einer Stickstoffatmosphäre.

**7.** Verfahren zur Herstellung eines porösen Materials (1) nach Anspruch 6, worin nach der Herstellung des porösen Silicium-Siliciumcarbid-Materials die dabei verwendete Atmosphäre in eine Stickstoffatmosphäre geändert wird, wobei die Temperatur nicht auf Raumtemperatur gesenkt, sondern auf 1.200 °C oder mehr gehalten wird, und das Nitridieren und Brennen des porösen Silicium-Siliciumcarbid-Materials bei 1.200 bis 1.800 °C unter der Stickstoffatmosphäre durchgeführt wird.

**8.** Verfahren zur Herstellung eines porösen Materials (1) nach Anspruch 6, worin nach der Herstellung des porösen Silicium-Siliciumcarbid-Materials das Nitridieren und Brennen des porösen Silicium-Siliciumcarbid-Materials bei 1.200 bis 1.800 °C unter der Stickstoffatmosphäre durchgeführt wird, die 0,1 Vol.-% oder mehr Wasserstoff enthält.

**9.** Verfahren zur Herstellung eines porösen Materials (1) nach Anspruch 6, worin nach der Herstellung des porösen Silicium-Siliciumcarbid-Materials die Atmosphäre in eine Stickstoffatmosphäre geändert wird, die 0,1 Vol.-% oder mehr Wasserstoff enthält, wobei die Temperatur nicht auf Raumtemperatur gesenkt, sondern auf 1.200 °C oder mehr gehalten wird, und das Nitridieren und Brennen des porösen Silicium-Siliciumcarbid-Materials bei 1.200 bis 1.800 °C unter der Stickstoffatmosphäre durchgeführt wird, die 0,1 Vol.-% oder mehr Wasserstoff enthält.

**10.** Wabenstruktur aus einem porösen Material (1) nach einem der Ansprüche 1 bis 5.

## Revendications

**1.** Matière poreuse (1) dans laquelle des particules en carbure de silicium (2) formant un agrégat sont liées les unes aux autres via du nitrure de silicium (3) en tant que liant dans un état tel que des pores (5) sont présents entre les particules en carbure de silicium (2), dans laquelle les pores (5) ont une surface spécifique de 1 $m^2/g$ ou moins, et dans laquelle
aucun nitrure de silicium colonnaire n'est formé à la surface du nitrure de silicium (3) à l'intérieur de chaque pore (5), ou même lorsque du nitrure de silicium colonnaire y est inévitablement formé, la quantité numérique du nitrure de silicium colonnaire ayant une épaisseur supérieure à 2 $\mu m$ et un rapport longueur/diamètre inférieur à 10 est supérieure à celle du nitrure de silicium colonnaire ayant une épaisseur de 2 $\mu m$ ou moins ou un rapport longueur/diamètre de 10 ou plus.

**2.** Matière poreuse (1) selon la revendication 1, ayant une porosité ouverte de 40 à 75 %.

**3.** Matière poreuse (1) selon la revendication 1 ou 2, dans laquelle les pores (5) ont un diamètre de pore moyen de 5 à 50 $\mu m$.

**4.** Matière poreuse (1) selon l'une quelconque des revendications 1 à 3, qui a une température de résistance à la chaleur de 1 200 °C ou plus.

**5.** Matière poreuse (1) selon l'une quelconque des revendications 1 à 4, qui a un coefficient de perméabilité aux gaz de 1 $\mu m^2$ ou plus.

**6.** Procédé de production d'une matière poreuse (1) selon l'une quelconque des revendications 1 à 5, dans lequel le procédé comprend les étapes consistant à :

mélanger au moins du silicium, du carbure de silicium et, optionnellement, un agent porogène ;
cuire le mélange résultant à une température de 1 400 à 1 500 °C dans une atmosphère de gaz inerte ou une atmosphère sous pression réduite où la pression partielle de l'oxygène est de 10 Pa ou moins pour préparer une matière poreuse contenant du silicium-carbure de silicium ; et
nitrurer et cuire la matière poreuse contenant du silicium-carbure de silicium à une température de 1 200 à 1 800 °C dans une atmosphère d'azote.

**7.** Procédé de production d'une matière poreuse (1) selon la revendication 6, dans lequel, après préparation de la matière poreuse contenant du silicium-carbure de silicium, l'atmosphère y étant utilisée est remplacée par une atmosphère d'azote sans abaisser la température à la température ambiante et en maintenant la température à 1 200 °C ou plus, et la nitruration et la cuisson de la matière poreuse contenant du silicium-carbure de silicium à une température de 1 200 à 1 800 °C dans l'atmosphère d'azote est réalisée.

**8.** Procédé de production d'une matière poreuse (1) selon la revendication 6, dans lequel, après préparation de la matière poreuse contenant du silicium-carbure de silicium, la nitruration et la cuisson de la matière poreuse contenant du silicium-carbure de silicium à une température de 1 200 à 1 800 °C est réalisée dans une atmosphère d'azote contenant 0,1 % en volume ou plus d'hydrogène.

**9.** Procédé de production d'une matière poreuse (1) selon la revendication 6, dans lequel, après la préparation de la matière poreuse contenant du silicium-carbure de silicium, l'atmosphère est remplacée par une atmosphère d'azote contenant 0,1 % en volume ou plus d'hydrogène sans abaisser la température à la température ambiante et en maintenant la température à 1 200 °C ou plus, et la nitruration et la cuisson de la matière poreuse contenant du silicium-carbure de silicium à une température de 1 200 à 1 800 °C est réalisée dans ladite atmosphère d'azote contenant 0,1 % en volume ou plus d'hydrogène.

**10.** Structure en nid d'abeilles constituée d'une matière poreuse (1) selon l'une quelconque des revendications 1 à 5.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0494736 A